(19)

Europäisches
Patentamt
European
Patent Office
Office européen
des brevets

(11) **EP 3 021 152 A1**

(12) **EUROPEAN PATENT APPLICATION**
published in accordance with Art. 153(4) EPC

(43) Date of publication:
**18.05.2016 Bulletin 2016/20**

(21) Application number: **14822900.8**

(22) Date of filing: **11.07.2014**

(51) Int Cl.:
**G02B 13/16** *(2006.01)* **G03B 21/14** *(2006.01)*

(86) International application number:
**PCT/JP2014/003693**

(87) International publication number:
**WO 2015/004926 (15.01.2015 Gazette 2015/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.07.2013 JP 2013145968**

(71) Applicant: **Nittoh Kogaku K.K.**
**Suwa-shi**
**Nagano 392-0131 (JP)**

(72) Inventor: **YAMAGISHI, Akira**
**Suwa-shi**
**Nagano 392-0021 (JP)**

(74) Representative: **Körber, Martin Hans**
**Mitscherlich PartmbB**
**Patent- und Rechtsanwälte**
**Sonnenstrasse 33**
**80331 München (DE)**

(54) **METHOD FOR MANUFACTURING OPTICAL SYSTEM, OPTICAL SYSTEM, AND PROJECTOR**

(57) There is provided a method of manufacturing an optical system including a lens system including a plurality of lenses. This method of manufacturing includes assembling an optical system (step 111), acquiring chromatic aberration of the optical system by carrying out performance tests (step 112), and replacing, based on the chromatic aberration of the optical system, an optical element, which is inserted any one of between the plurality of lenses, on the outside a lens closest to a magnifying side out of the plurality of lenses, and on the outside a lens closest to a reducing side out of the plurality of lenses, with another optical element where the optical distance is the same but the chromatic aberration of magnification is different (step 113).

Fig. 3

START

ASSEMBLE OPTICAL SYSTEM INCLUDING LENS SYSTEM AND PLANAR OPTICAL ELEMENT — 111

OPTICAL PERFORMANCE TESTS (CHROMATIC ABERRATION) — 112

IS OBTAINED CHROMATIC ABERRATION WITHIN TOLERATED RANGE OF DESIGN VALUES — 113

IS CHROMATIC ABERRATION OF MAGNIFICATION OF BLUE OUTER SIDE OF DESIGN VALUES — 114

REPLACE WITH CEMENTED CURVED SURFACE–TYPE OPTICAL ELEMENT WHERE $\nu 1 < \nu 2$ — 116

REPLACE WITH CEMENTED CURVED SURFACE–TYPE OPTICAL ELEMENT WHERE $\nu 1 > \nu 2$ — 115

END

**Description**

TECHNICAL FIELD

The present invention relates to a method of manufacturing an optical system including a lens system.

BACKGROUND ART

Japanese Laid-Open Patent Publication No. 2007-41529 discloses the provision of a method of manufacturing a projection optical system where it is possible to obtain the desired optical performance by carrying out an efficient adjustment operation. According to this document, four curved mirrors and a DMD are attached to lower and upper pedestal components, the curved mirrors include a concave mirror placed closest to the DMD and a convex mirror placed next to the concave mirror, the position and inclination of the convex mirror are fixed, and the position and inclination of the concave mirror are adjusted on at least three axes.

DISCLOSURE OF THE INVENTION

There is demand to provide a high-performance optical system even more reliably.
One aspect of the present invention is a method of manufacturing an optical system including a lens system including a plurality of lenses, the method including the following steps.

> 1. Acquiring chromatic aberration of the optical system.
> 2. Replacing, based on the chromatic aberration of the optical system, an optical element, which is inserted any one of between the plurality of lenses, on an outside a lens closest to a magnifying side out of the plurality of lenses, and on an outside a lens closest to an image-reducing side out of the plurality of lenses, with another optical element where an optical distance is the same but a chromatic aberration of magnification is different.

Even if the manufacturing precision of individual lenses is improved and the assembly precision is improved in order to obtain a high optical performance in an optical system that includes a plurality of lenses, there can still be variation in the optical performance due to the tolerances for the characteristic values of the individual lenses, the assembly tolerance, and the like. In this method, the chromatic aberration is confirmed in a state where the plurality of lenses that construct an optical system have been assembled and if the chromatic aberration exceeds a range of a design value, it is possible, by replacing with another optical element that has a same optical distance and a different chromatic aberration of magnification, to move closer to the design value. Accordingly, it is possible to supply an optical system with high optical performance more constantly.

The replacing includes replacing a planar optical element that does not include a curved surface element with a planar optical element that includes a cemented curved surface. It is desirable for the optical element that includes a cemented curved surface to include a first element that is plano-concave and a second element that is plano-convex, and for a refractive index n1 of the first element, a refractive index n2 of the second element, an Abbe number v1 of the first element, and an Abbe number v2 of the second element to satisfy Conditions (1) and (2) below.

$$0 \leq |n1\text{-}n2| < 0.02 \ldots (1)$$

$$2 < |v1\text{-}v2| < 33 \quad \ldots (2)$$

It is also desirable for the replacing to include replacing, when the chromatic aberration of magnification of blue, out of the chromatic aberration, has moved to an outer side of a design value, with an optical element that includes a cemented curved surface such that the Abbe number v1 is larger than the Abbe number v2 and replacing, when the chromatic aberration of magnification of blue has moved to an inner side of the design value, with an optical element that includes a cemented curved surface such that the Abbe number v1 is smaller than the Abbe number v2.

The optical system may be a zooming optical system. Also, it is desirable to replace an optical element inserted on the outside of a lens closest to the image-reducing side. The optical element may become smaller and it becomes easy to replace the optical element while hardly affecting the assembled state of the other lenses of the lens system and the like. One example of an optical system is an optical system that projects projection light from a light modulating device disposed on the image-reducing side. In a projection optical system, it is desirable to replace an optical element inserted outside the lens closest to the image-reducing side in a space between the lens and the light modulating device.

If the lens system is a zoom lens system with variable magnification or a varifocal lens system, the chromatic aberration of magnification that has a tendency to increase in proportion to the image angle is likely to appear prominently at the wide angle end. Accordingly, it is possible to replace the optical element by mainly focusing on the chromatic aberration of magnification at the wide angle end. By providing one or a plurality of replacement optical elements in advance, it is possible to stably or constantly provide an optical system equipped with high performance with hardly any loss in mass productivity.

Another aspect of the present invention is a projector including an optical system manufactured by the method described above and a light modulating device disposed on an outside of a lens closest to the image-reducing side of the optical system.

Yet another aspect of the present invention is an optical system including a lens system including a plurality of lenses, wherein an optical element, which is inserted any one of between the plurality of lenses, on an outside of a lens closest to a magnifying side out of the plurality of lenses, and on an outside of a lens closest to an image-reducing side out of the plurality of lenses, is replaced, based on chromatic aberration acquired during manufacturing, with another optical element that has a same optical distance and a different chromatic aberration of magnification. The other optical element may be an optical element that is planar type and includes a cemented curved surface. The optical element that includes a cemented curved surface may include a first element that is plano-concave and a second element that is plano-convex, and a refractive index n1 of the first element, a refractive index n2 of the second element, an Abbe number v1 of the first element, and an Abbe number v2 of the second element may satisfy Conditions (1) and (2) described above.

BRIEF DESCRIPTION OF THE DRAWINGS

[FIG. 1]

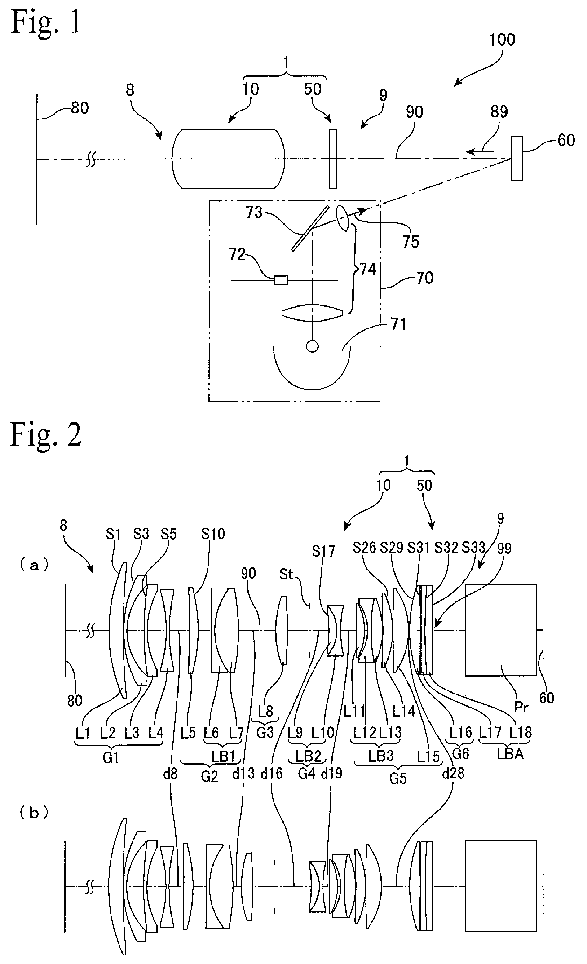

FIG. 1 shows an overview of a projector.
[FIG. 2]
FIG. 2 shows the overall configuration of an optical system which includes a lens system and in which an optical element has been replaced with a cemented curved surface-type optical element, where FIG. 2(a) includes a lens arrangement at the wide angle end and FIG. 2(b) includes a lens arrangement at the telephoto end.
[FIG. 3]

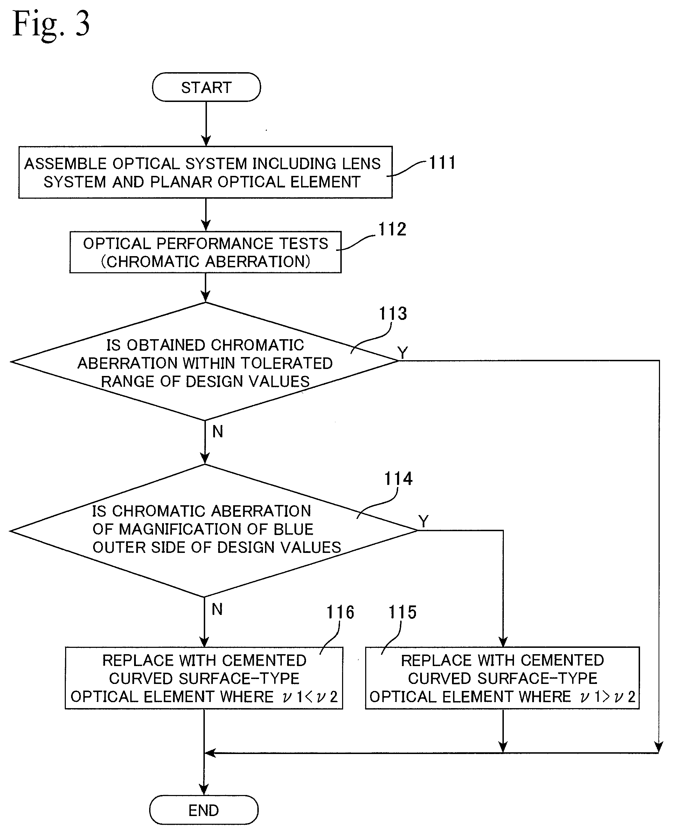

FIG. 3 is a flowchart showing a method of manufacturing an optical system.
[FIG. 4]

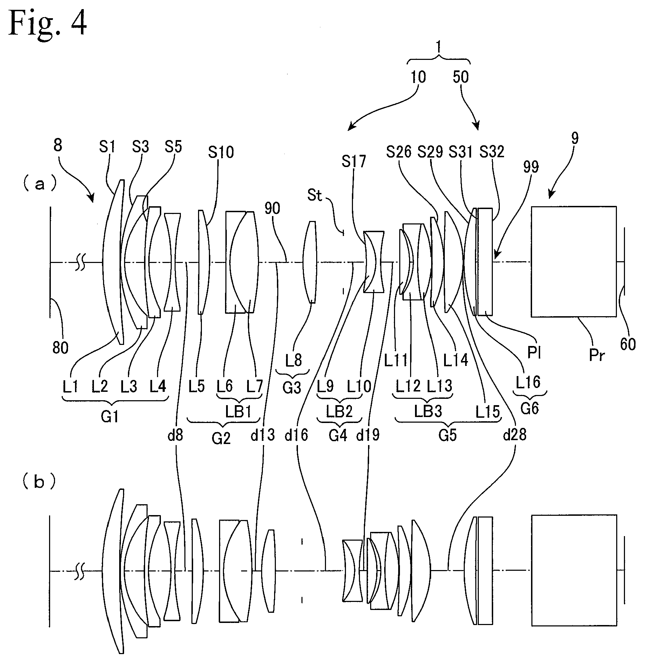

FIG. 4 shows an optical system that is an optical system including a lens system and includes a planar optical element that does not include a curved surface element, where FIG. 4(a) includes a lens arrangement at the wide angle end and FIG. 4(b) includes a lens arrangement at the telephoto end.
[FIG. 5]

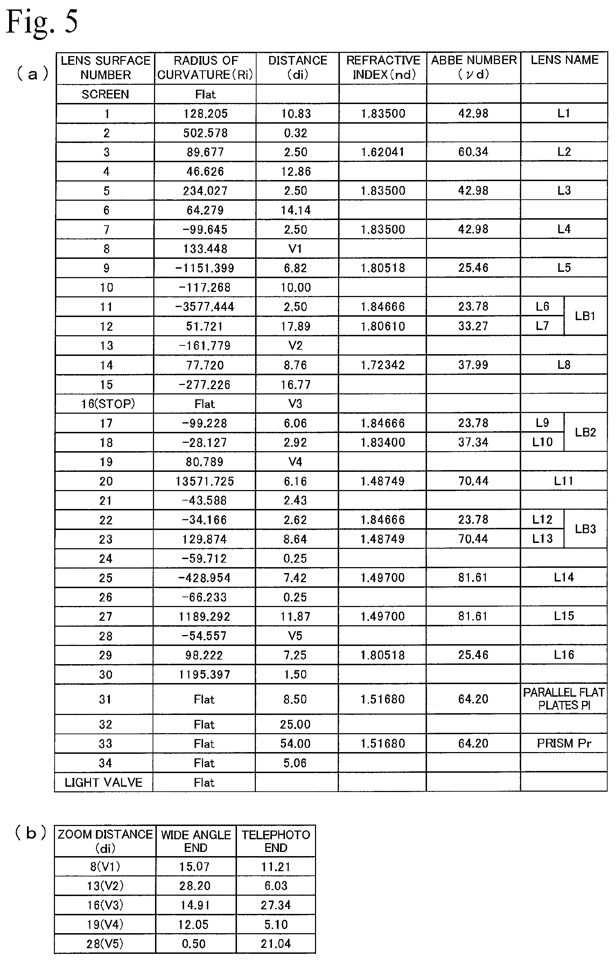

FIG. 5 shows various values of the optical system shown in FIG. 4, where FIG. 5(a) shows lens data and FIG. 5(b) shows zoom data.
[FIG. 6]

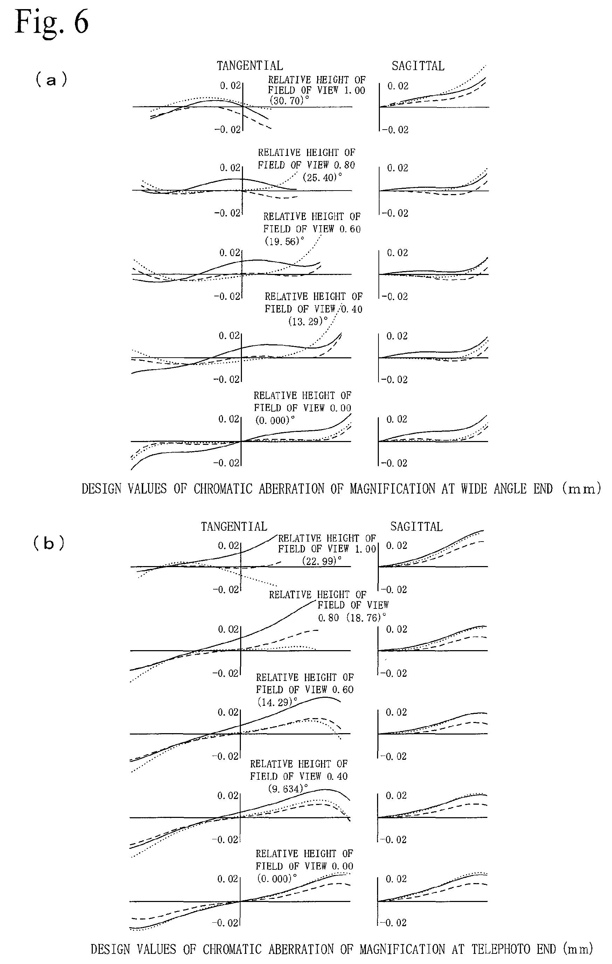

FIG. 6 shows design values of the chromatic aberration of magnification of the optical system shown in FIG. 4, where FIG. 6(a) shows design values at the wide angle end and FIG. 6(b) shows design values at the telephoto end.

[FIG. 7]

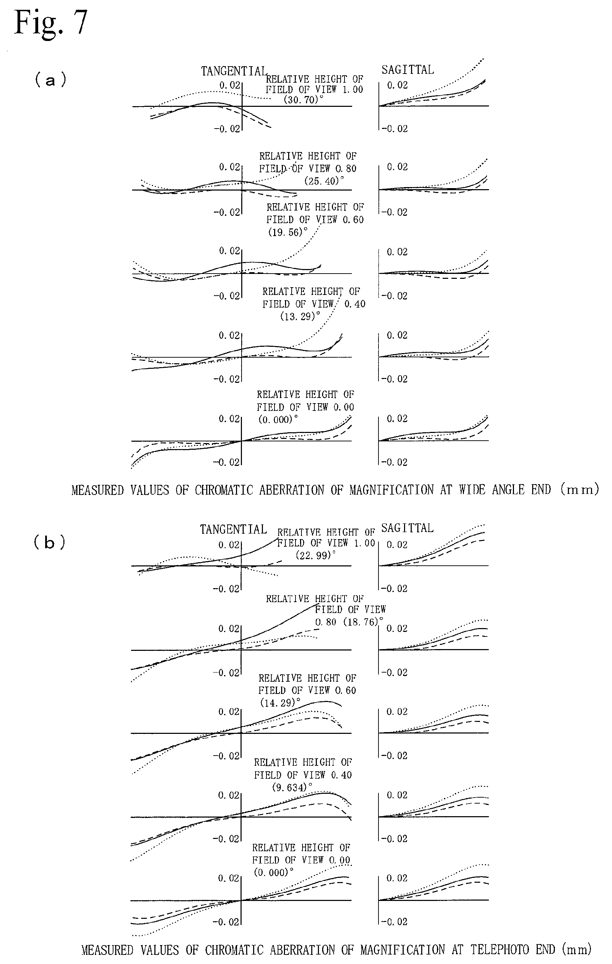

FIG. 7 shows measured values of the chromatic aberration of magnification of an optical system shown in FIG. 4 where tolerance has been assumed for the Abbe numbers, where FIG. 7(a) shows measured values at the wide angle end and FIG. 7(b) shows measured values at the telephoto end.
[FIG. 8]

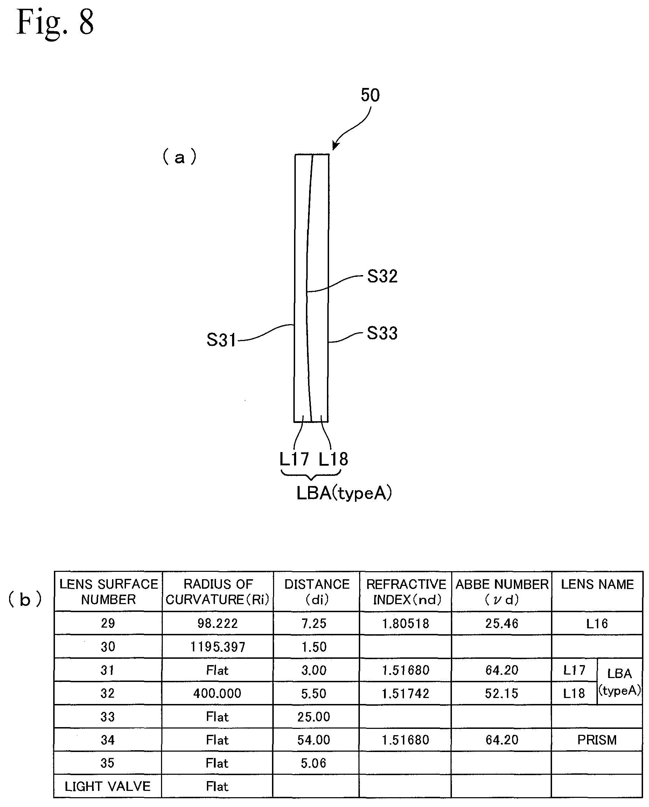

FIG. 8 shows one example of a cemented curved surface-type optical element, where FIG. 8(a) shows the overall configuration and FIG. 8(b) shows data of the optical element and some of the other the optical elements of the optical system when a cemented curved surface-type optical element has been substituted.
[FIG. 9]

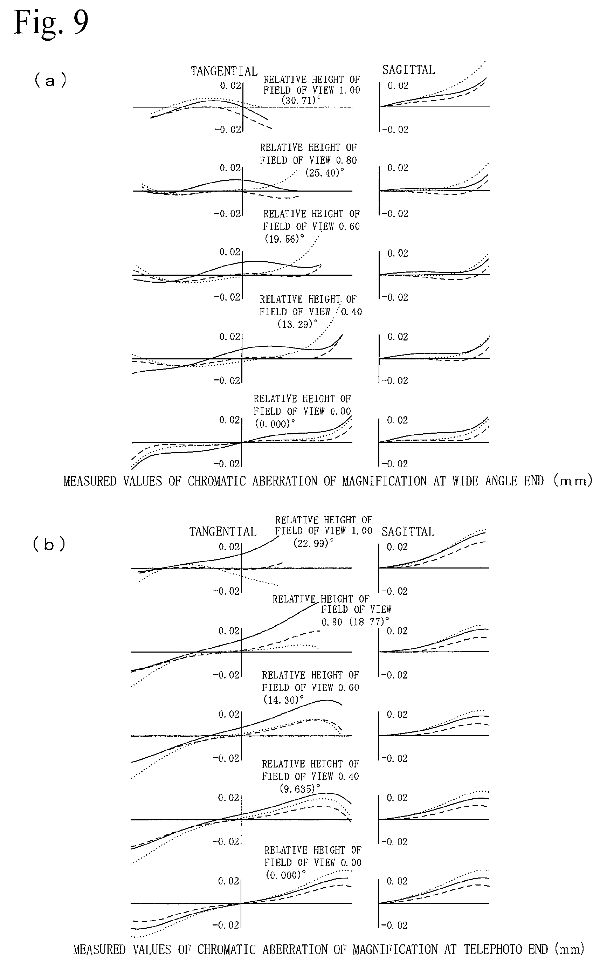

FIG. 9 shows measured values of the chromatic aberration of magnification of an optical system shown in FIG. 7 where an optical element has been replaced with a cemented curved surface type, where FIG. 9(a) shows measured values at the wide angle end and FIG. 9(b) shows measured values at the telephoto end.
[FIG. 10]

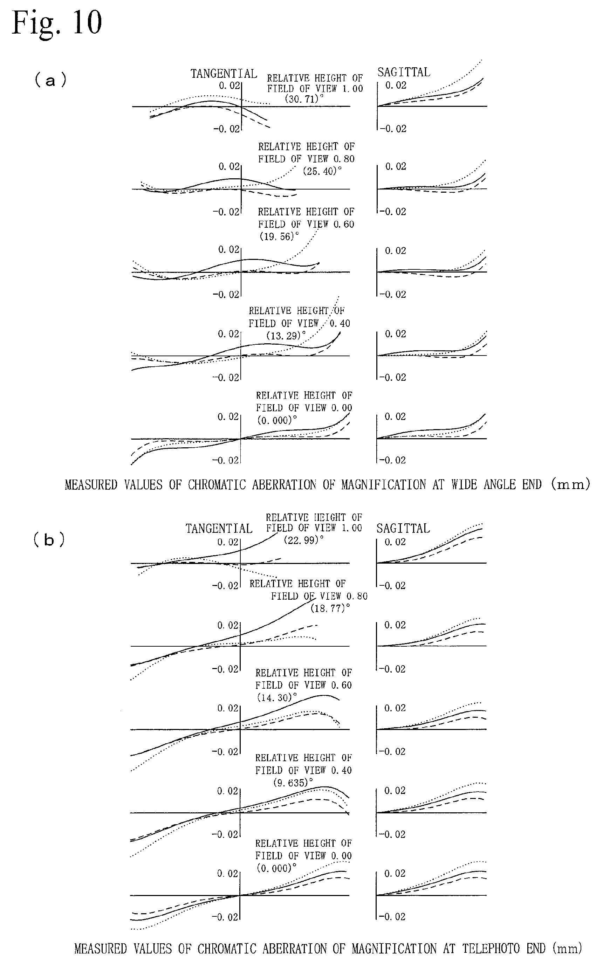

FIG. 10 shows measured values of the chromatic aberration of magnification of an optical system shown in FIG. 7 where an optical element has been replaced with a cemented curved surface type with another radius of curvature, where FIG. 10(a) shows measured values at the wide angle end and FIG. 10(b) shows measured values at the telephoto end.
[FIG. 11]

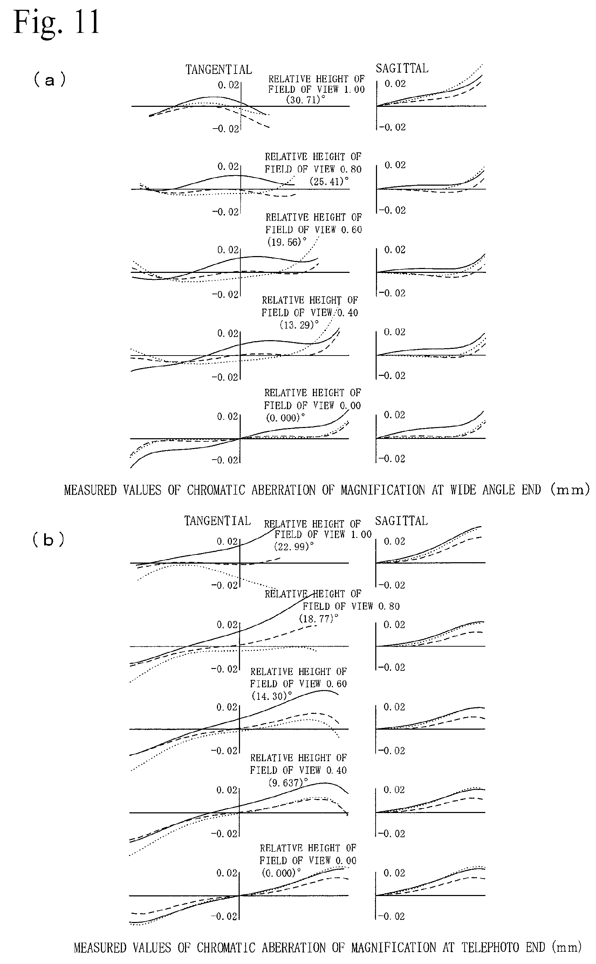

FIG. 11 shows measured values of the chromatic aberration of magnification of an optical system shown in FIG. 7 where an optical element has been replaced with a cemented curved surface type with yet another radius of curvature, where FIG. 11(a) shows measured values at the wide angle end and FIG. 11(b) shows measured values at the telephoto end.
[FIG. 12]

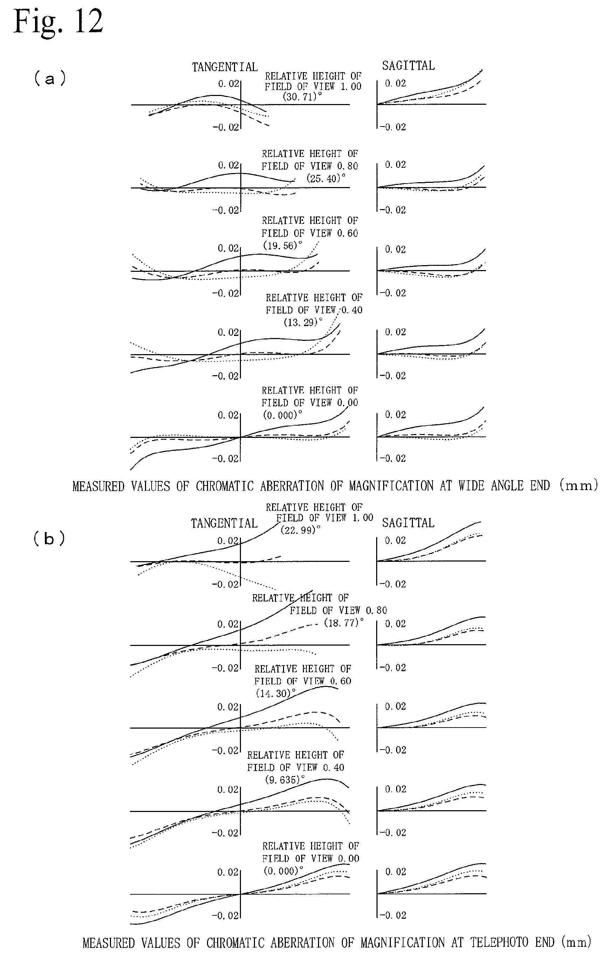

FIG. 12 shows measured values of the chromatic aberration of magnification of an optical system shown in FIG. 4 where different tolerances have been assumed for the Abbe numbers, where FIG. 12(a) shows measured values at the wide angle end and FIG. 12(b) shows measured values at the telephoto end.
[FIG. 13]

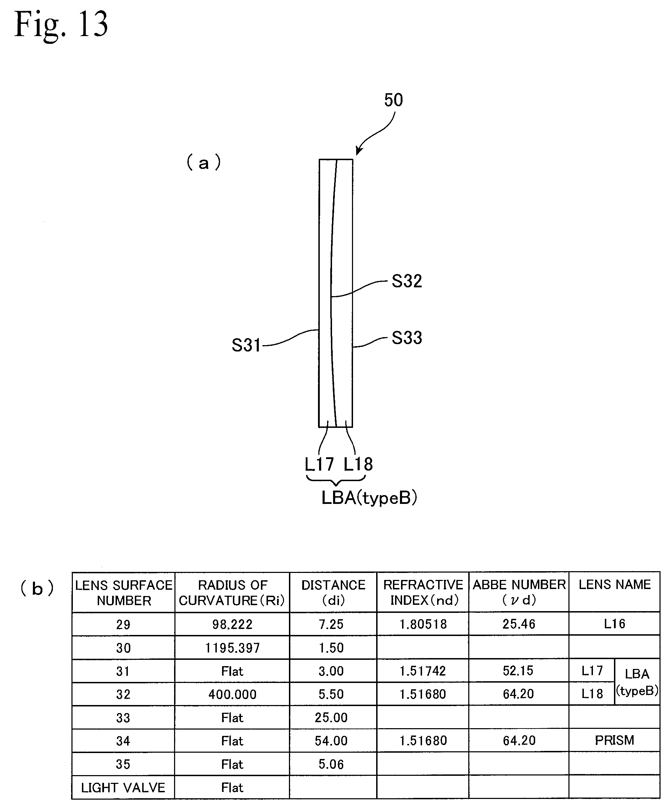

FIG. 13 shows a different cemented curved surface-type optical element, where FIG. 13(a) shows the overall configuration and FIG. 13(b) shows data of the optical element and some of the other the optical element of the optical system when a cemented curved surface-type optical element has been substituted.
[FIG. 14]

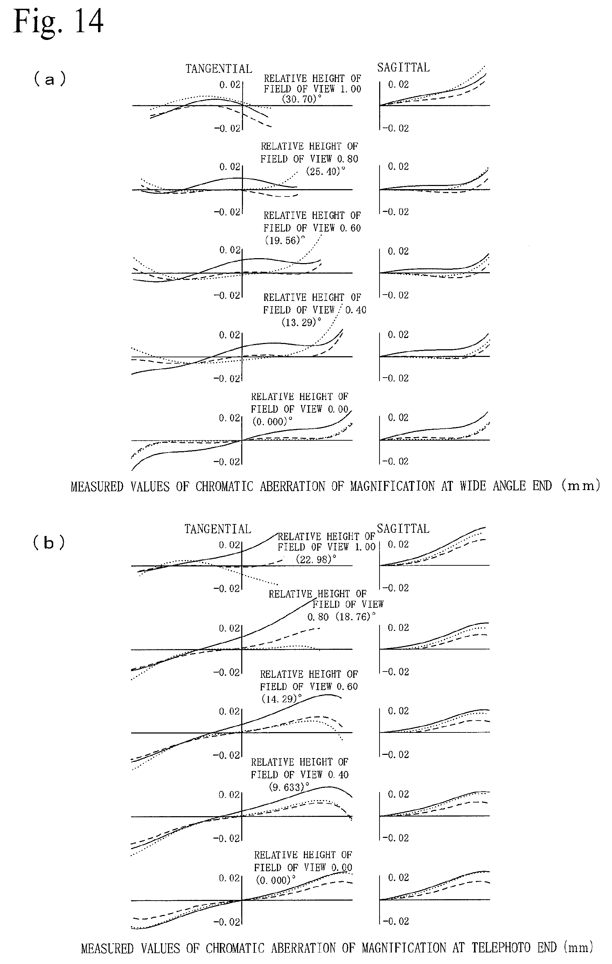

FIG. 14 shows measured values of the chromatic aberration of magnification of an optical system shown in FIG. 12 where an optical element has been replaced with a cemented curved surface type, where FIG. 14(a) shows measured values at the wide angle end and FIG. 14(b) shows measured values at the telephoto end.

[FIG. 15]

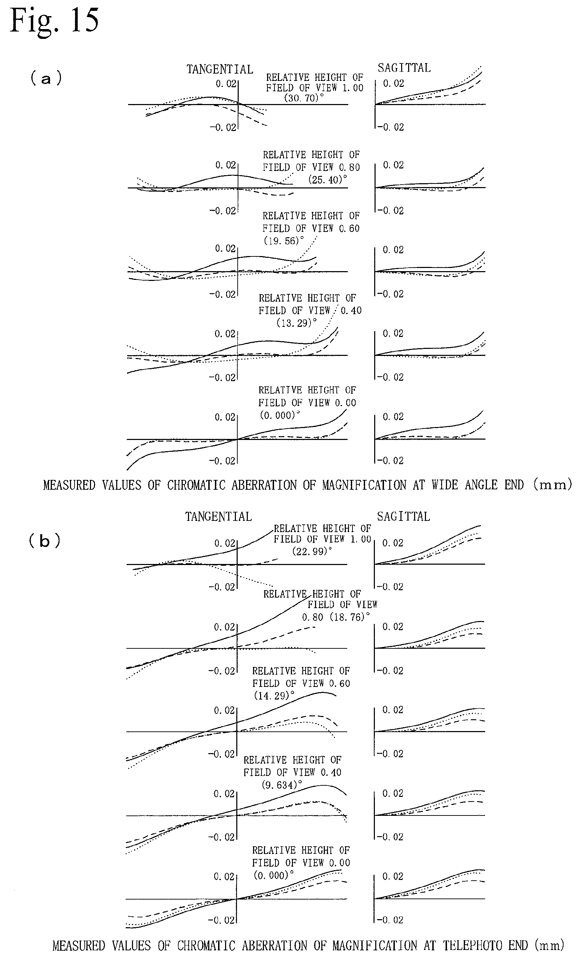

FIG. 15 shows measured values of the chromatic aberration of magnification of an optical system shown in FIG. 12 where an optical element has been replaced with a cemented curved surface type with another radius of curvature, where FIG. 15(a) shows measured values at the wide angle end and FIG. 15(b) shows measured values at the telephoto end.

[FIG. 16]

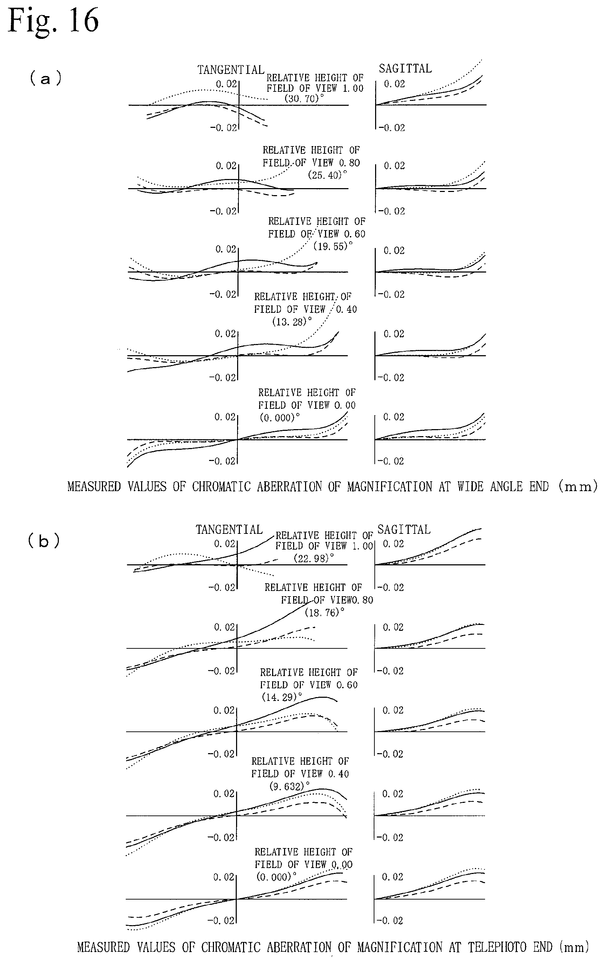

FIG. 16 shows measured values of the chromatic aberration of magnification of an optical system shown in FIG. 12 where an optical element has been replaced with a cemented curved surface type with yet another radius of curvature, where FIG. 16(a) shows measured values at the wide angle end and FIG. 16(b) shows measured values at the telephoto end.

DETAIL DESCRIPTION

FIG. 1 shows an overview of a projector 100. The projector 100 includes a light modulating device (light valve) 60, an illumination system 70 that illuminates the light valve 60 with illumination light to be modulated, and an optical system 1 that magnifies and projects image light (projection light) 89 formed by the light valve 60 onto a screen 80.

The optical system 1 includes a lens system 10, which is positioned on the magnifying side (screen side) 8 and includes a plurality of lenses, and an optical element 50, which is positioned on the image-reducing side (light-valve side) 9. The optical element 50 is disposed on the outside of the image-reducing side 9 of the lens system 10 and is disposed between the lens system 10 and the light valve 60.

The projector 100 may be a front projector or may be a rear projector that includes a screen. One example of the light valve (light modulating device) 60 is a DMD (digital mirror device), but the light valve 60 may be another device that forms an image, such as a reflective LCD, a transmissive LCD, an LCoS, or organic EL. The light valve 60 may be a single panel or may use an arrangement (three-panel arrangement) where images of the respective colors are formed separately. The screen 80 may be a white board, a wall surface, a table surface, or the like.

A typical example of the projector 100 is a single-panel video projector that uses a DMD as the light valve 60, the illumination system (lighting system) 70 is equipped with a light source 71, such as a halogen lamp or white LEDs, and a disc-like rotating color-splitting filter (or "color wheel") 72, the DMD 60 is illuminated with red, green and blue light according to time division, so that projection light 89 for forming a color image is emitted from the light valve 60. The illumination system 70 may further include an illumination lens system 74 that outputs the illumination light 75 onto the DMD 60 via a mirror 73 and the like.

FIG. 2 shows the overall configuration of the optical system 1. The lens system 10 included in the optical system (optical apparatus) 1 is a zoom lens system composed of a plurality of lenses, with FIG. 2(a) showing the lens arrangement at the wide angle end and FIG. 2b showing the lens arrangement at the telephoto end.

The lens system 10 is configured with six lens groups numbered as a first lens group G1 to a sixth lens group G6, and is a projection optical system that is capable of magnification and is constructed of a total of 16 glass lenses. The first lens group G1 that is closest to the magnifying side has an overall negative refractive power and is constructed, in order from the screen 80 side (the magnifying side) to the DMD 60 side (the image-reducing side 9) of a positive meniscus lens L1 whose convex surface S1 faces the screen 80 side, a negative meniscus lens L2 whose convex surface S3 faces the screen 80 side, a negative meniscus lens L3 whose convex surface S5 faces the screen 80 side, and a negative biconcave lens L4. The second lens group G2 has an overall positive refractive power and includes a positive meniscus lens L5 whose convex surface S10 faces the DMD 60 side, and a cemented lens (balsam lens) LB1 where two lenses are stuck together. The third lens group G3 has an overall positive refractive power and includes a positive biconvex lens L8 and a stop St. The fourth lens group G4 has an overall negative refractive power and includes a cemented lens LB2 where two lenses are stuck together. The fifth lens group G5 has an overall positive refractive power and includes a positive biconvex lens L11, a cemented lens LB3 where two lenses are stuck together, a positive meniscus lens L14 whose convex surface S26 faces the DMD 60 side, and a positive biconvex lens L15. The sixth lens group G6 has an overall positive refractive power and includes a positive meniscus lens L16 whose convex surface S29 faces the screen 80 side, with the optical element 50 also being included in the sixth lens group G6.

The cemented lens LB1 is composed of a negative biconcave lens L6 and a positive biconvex lens L7 that are disposed in that order from the screen 80 side. The cemented lens LB2 is composed of a positive meniscus lens L9 whose concave surface S17 faces the screen 80 side and a negative biconcave lens L10 that are disposed in that order from the screen 80 side. The cemented lens LB3 is composed of a negative biconcave lens L12 and a positive biconvex lens L13 that are disposed in that order from the screen 80 side.

When zooming from the wide angle end toward the telephoto end, the first lens group G1 and the sixth lens group G6 of the lens system 10 do not move and the second lens group G2, the third lens group G3, the fourth lens group G4, and the fifth lens group G5 all move along an optical axis 90 from the DMD 60 side toward the screen 80 side so that the lenses included in the respective groups move together.

On the image-reducing side 9, the optical system 1 includes the optical element (optical unit) 50 disposed on the outside of the sixth lens group G6 that does not move during zooming. The optical element 50 shown in FIGS. 2(a) and (b) is a planar-type optical element LBA in which curved surfaces of two glass elements are cemented together.

The cemented curved-surface optical element LBA is constructed, in order from the screen 80 side, of a first element (or "first plate", "first lens", or "first part") L17 that is plano-concave, has negative refractive power, and whose flat surface S31 faces the screen 80 side and a second element (or "(second plate", "(second lens", or "(second part") L18 that is plano-convex, has positive refractive power, and whose flat surface S33 faces the DMD 60 side. The absolute values of the radius of curvature ( or curvature) of the concave surface of the negative lens L17 that faces the DMD 60 side and the convex surface of the positive lens L18 that faces the screen 80 side are equal, which means that it is possible to stack (i.e., stick together) the surfaces without producing an air gap in between. Accordingly, the cemented curved-surface optical element LBA is an optical element where the surfaces S31 and S33 on both sides are flat and that has a curved cemented surface S32 formed inside.

The optical element 50 (LBA) is disposed on the outside (the DMD 60 side) of the positive lens L16 that is closest to the DMD 60 out of the lens system 10 and a prism Pr and the DMD 60 are disposed in that order on the DMD 60 side of the optical element 50. Examples of the prism Pr include a dichroic prism that combines the image light of the respective colors R, G, and B, and a TIR prism.

FIG. 3 shows a method of manufacturing (manufacturing method) the optical system 1 by way of a flowchart. In this method of manufacturing, in step 111, the optical system 1 is assembled from the lens system 10, which includes the plurality of lenses L1 to L16, and the optical element 50. The optical element 50 that is initially used in the optical system 1 during assembly is a planar optical element P1 shown in FIG. 4 and described below, and does not include elements with curved surfaces. After assembly, in step 112, the optical performance of the optical system 1 is tested and various aspects of the performance of the optical system 1 including chromatic aberration (chromatic aberration of magnification) are confirmed. This optical performance test may be a pre-test (preliminary test) or may be a pre-shipping test. The optical performance test is not limited to a single execution and may be repeated a plurality of times.

In step 113, it is determined whether measured values (aberration as actually measured, preliminary optical performance values) of the chromatic aberration of magnification of the optical system 1 after assembly obtained by the performance test are within a preset tolerated range for design values (aberration as designed, designed optical performance values). One example of a determination of whether the measured values are within a range of tolerance is to determine whether the difference between the measured values of the chromatic aberration of magnification (the image formation position or image formation magnification) of a predetermined color (for example, blue) and the design values is within a certain percentage of the pixel pitch (dot pitch). The tolerated range may be set so that the difference between the measured values of the chromatic aberration of magnification for blue at the wide angle end and the design values is ±75% of the dot pitch or may be set as ±50% of the dot pitch.

In step 113, if the difference between the measured values of the chromatic aberration of magnification obtained by the tests and the design values is within the tolerated range, the optical element 50 is not replaced. Accordingly, an optical system 1 that includes, as the optical element 50, the optical element P1 of a planar type that does not include elements with curved surfaces is manufactured. That is, if the measured values of the chromatic aberration of magnification obtained by the tests are values (second values) that are within the tolerated range, the optical element (second optical element) P1 of a planar type that does not include elements with curved surfaces is selected as the optical element 50, and the optical system 1 that includes the optical element P1 is shipped as a completed product. Provided that the optical distance is the same, the optical element P1 of a planar type that does not include elements with curved surfaces may be a non-cemented optical element or may be a cemented optical element.

In step 113, if the difference between the measured values of the chromatic aberration of magnification obtained by the tests and the design values is not within the tolerated range, the optical element 50 is replaced with an optical element LBA of a cemented curved surface-type that has the same optical distance but has different chromatic aberration of magnification to the optical element P1 of a planar type that does not include elements with curved surfaces. That is, if the measured values of the chromatic aberration of magnification obtained by the tests are values ("first values") that are without the tolerated range, an optical element ("first optical element") LBA that is planar and includes an element with a curved surface is selected as the optical element 50 and an optical system 1 that includes such optical element LBA is shipped as a completed product. At this time, first, in step 114, it is confirmed whether the measured values of the chromatic aberration of magnification obtained by the tests have moved to the outside (to the plus side) to the set values. When the measured values of the chromatic aberration of magnification have moved to the outside (high side) to the set values, in step 115, the optical element 50 is replaced with a type A optical element LBA that is an optical element LBA with cemented curved surfaces and for which the Abbe number v1 of the first element (lens) L17 that is plano-concave is larger than the Abbe number v2 of the second element (lens) L18 that is plano-convex.

In addition, in step 115, out of a plurality of optical elements LBA with different values of chromatic aberration of magnification as type A that are provided in advance, an element with a value suited to correcting the difference between the measured values of the chromatic aberration of magnification obtained by the tests and the design values is selected and used as a replacement. By doing so, it is possible to omit a number of processing steps for repeating measurement of the chromatic aberration of magnification and to manufacture and supply an optical system 1 with predetermined performance. In the present embodiment, three optical elements LBA where the radius of curvature of the cemented curved surfaces is respectively 600, 400, and 200mm are provided as type A, and by doing so, the optical element LBA (type A) with a radius of curvature suited to correcting the difference between the measured values of the chromatic aberration of magnification obtained by the tests and the design values is selected and used to replace the planar optical element P1.

It is possible to remeasure the chromatic aberration of magnification and the like after the optical element 50 has been replaced from the planar optical element P1 to the optical element LBA that includes a curved surface to confirm the optical performance.

If, in step 114, the measured values of the chromatic aberration of magnification obtained by the tests has moved to the inner side (the minus side) of the design values, in step 116 the optical element 50 is replaced with a type B optical element LBA that is an optical element LBA with cemented curved surfaces and for which the Abbe number v1 of the first lens L17 that is plano-concave is smaller than the Abbe number v2 of the second lens L18 that is plano-convex.

In this method of manufacturing, by first assembling the optical system 1, testing the optical performance, and replacing the optical element 50 if the result of testing is that the chromatic aberration of magnification exceeds a tolerated range, it is possible to suppress the chromatic aberration of magnification to within the tolerated range. As the optical element 50 that is replaceable, it is possible to insert in advance an optical element 50 that is flat on both surfaces and is an interface with other optical elements (lenses) that are not to replaceable, and by replacing such optical element 50 with an optical element 50 that has the same optical distance, is flat on both surfaces, incorporates a curved surface, and has a different chromatic aberration of magnification, it is possible to correct the chromatic aberration of magnification without changing the fundamental optical performance of the optical system 1 aside from the chromatic aberration of magnification. That is, it is possible to correct the chromatic aberration of the optical system 1 without changing the image formation position of the projection light of the optical system 1. This means that it is possible to stably or more constantly manufacture the optical system 1 that has the desired high performance and to improve the yield when manufacturing optical systems.

In recent years, in the field of projectors, there has been demand for high-definition projected images referred to as "high vision" or "super high vision". In response to the increasingly high definition required for projected images, improvements have been made in the design performance of lens systems, improvements have been made in the machining precision (fabrication precision) of the lenses themselves that construct lens systems, and improvements have been made in the work precision (assembly precision) when assembling the respective lenses. However, the tolerance of the Abbe number for optical glass that is currently being supplied to the market is around $\pm$ 0.5%. When attempting to manufacture a high-performance lens system by improving the design performance, the assembly precision of the respective lenses, the assembly precision of a plurality of lenses, and the like, it is difficult for a manufacturer of lens systems to control tolerances on the properties of optical glass, such as the Abbe number, and this acts as an obstacle making it difficult to provide an optical system equipped with the desired high performance.

Even if it were possible to manufacture an optical system where the chromatic aberration of magnification matches the design values by summing the tolerances of individual lenses caused by factors that are difficult to control on the manufacturer side, such as changes in the properties of optical glass, there would still be the risk of exceeding (departing from) a tolerated value of the chromatic aberration of magnification demanded as a product standard. If the optical performance of the optical system 1 is without the tolerated range, this can affect the image quality of the projected images. It may also be possible, by changing the combination of a plurality of lenses that construct the lens system (optical system), to make the optical performance resulting from the sum of the tolerances of the respective lenses fall within a predetermined tolerated range. However, if a plurality of lenses that construct the lens system are replaced, processing steps for confirming the optical performance are required every time lenses are replaced, which affects the manufacturing cost and manufacturing time. In addition, there is no guarantee that the desired performance will be obtained even if lenses are replaced.

With this method of manufacturing, by incorporating an optical element 50, which is in the form of parallel flat plates that hardly influences optical performance aside from chromatic aberration of magnification, in advance in the optical system 1, it is possible to select, based on the chromatic aberration of magnification obtained after the optical system 1 has been fundamentally manufactured by assembling a plurality of lenses, whether the optical element 50 that is replaceable is to be set without replacement as the optical element P1 in the form of parallel flat plates or is to be replaced with an optical element LBA with cemented curved surfaces in order to correct the chromatic aberration of magnification. Accordingly, if a predetermined optical performance has been obtained due to the sum of the tolerances for the performance of the respective lenses L1 to L16 that construct the lens system 10, the assembly tolerance when assembling the lens system 10, and the like, it is possible to ship the optical system 1 in that state.

On the other hand, if the measured values of the chromatic aberration of magnification exceed a tolerated range for the design values due to the sum of the tolerances for a plurality of lenses and the like, by replacing the optical element 50, it is possible to suppress the measured values of the chromatic aberration of magnification of the optical system 1 to within the tolerated range easily, at low cost, and in a short time and to ship an optical system 1 with a predetermined optical performance. Accordingly, by using the optical system 1 manufactured using this method of manufacturing, it is possible to provide the projector 100, which is capable of projecting high-quality projected images on the screen 80, stably and at low cost.

The optical element 50 to be replaced may be inserted at any position between the plurality of lenses L1 to L16 that construct the lens system 10 where a sufficient air gap for inserting the optical element 50 can be found, on the outside of the lens L1 that is closest to the magnifying side 8, or on the outside of the lens L16 that is closest to the image-reducing side 9. The optical element 50 that is replaceable is not limited to a single element and a plurality of optical elements may be replaceable. In the optical system 1, the optical element 50 to be replaced may be incorporated not into a gap between lenses that construct the lens system 10 but into a gap 99 on the DMD 60-side (image-reducing side 9) end of the lens system 10 (i.e., on the outside of the lens system 10). It is possible to replace the optical element 50 without causing changes to the configuration of the lens system 10, for example, without reattaching the respective lenses to the lens holder of the lens system 10. This means that when it is necessary to replace the optical element 50 according to the chromatic aberration of magnification after the lens system 10 has been assembled, since it is possible to easily replace the optical element 50 and keep the performance of the lens system 10 itself in a stable state, it is possible to omit the effort of repeatedly measuring the optical performance of the optical system 1.

In addition, with the optical system 1, the sixth lens group G6 that is closest to the image-reducing side 9 does not move during zooming, which means that the distance to the optical element 50 that is replaceable will not change even when zooming is performed. Accordingly, even if the optical element 50 is replaced, it is possible to minimize the influence on the optical performance, aside from the correction of the chromatic aberration of magnification achieved by such replacement. When the optical element 50 that is replaceable is disposed inside the lens system 10, it is desirable to dispose the optical element 50 that is replaceable inside one of the lens groups that integrally move during zooming, not in a gap between lenses where the distance changes during zooming.

Also, by disposing the optical element 50 that is replaceable on the image-reducing side 9 of the lens system 10 where lenses with a small effective diameter are typically disposed, it is possible to reduce the effective diameter of the optical element 50 that is replaceable. This means that it is possible to provide replacement optical elements 50 for correcting the chromatic aberration of magnification at low cost, which makes it easier to reduce the manufacturing cost of the optical system 1. The optical element 50 that is replaceable may be disposed on the outside of the lens L1 that is closest to the magnifying side 8 (i.e., on the screen 80 side). The optical element 50 to be replaced may also be disposed between the prism Pr and the DMD 60.

FIG. 4 shows the overall configuration of the optical system 1 assembled in step 111. FIG. 4(a) shows the lens arrangement at the wide angle end and FIG. 4(b) shows the lens arrangement at the telephoto end. FIG. 5 shows various values of the optical system 1. FIG. 5(a) is lens data of the lens system 10 and FIG. 5(b) is zoom data of the lens system 10. FIG. 6 shows design values of the chromatic aberration of magnification of the optical system 1. FIG. 6(a) is design values of the chromatic aberration of magnification at the wide angle end and FIG. 6(b) is design values of the chromatic aberration of magnification at the telephoto end.

In FIG. 5(a), "Ri" represents the radius of curvature (mm) of each lens (i.e., each lens surface) disposed in order from the screen 80 side, "di" represents the distance (mm) between the respective lens surfaces disposed in order from the screen 80 side, "nd" represents the refractive index (d line) of each lens disposed in order from the screen 80 side, "vd" represents the Abbe number (d line) of each lens disposed in order from the screen 80 side, and "flat" indicates a flat surface. The chromatic aberration of magnification in FIGS. 6(a) and (b) is shown separately for tangential rays and sagittal rays for blue light (with a wavelength of 470nm) (dotted line), green light (with a wavelength of 550nm) (broken line), and red light (with a wavelength of 620nm) (solid line). This also applies to the aberration graphs referred to later.

The optical system 1 assembled first includes the lens system 10, which includes a plurality of lenses, and the optical element 50 incorporated between the light valve 60 and the lens system 10, with the optical element (optical unit) P1 of a non-cemented type that does not include an element with a curved surface being used as the optical element 50. The configuration of the lens system 10 is the same as the optical system 1 shown in FIG. 2. The optical element P1 that is replaceable may be a cemented type that does not include an element with a curved surface or may be an element where two or more flat plates are disposed in parallel. Also, when it is established in advance from the characteristics of the lens system 10 that chromatic aberration of magnification is to be corrected in a specified direction, the optical element 50 may be an optical element that produces chromatic aberration of magnification and is cemented curved surface-type element.

FIG. 7 shows an example of measured values of the chromatic aberration of magnification of the optical system 1 in an assembled state, such values having been measured in the performance tests in step 112. FIG. 7(a) is measured values of the chromatic aberration of magnification at the wide angle end and FIG. 7(b) is measured values of the chromatic aberration of magnification at the telephoto end. The measured values shown in FIG. 7 assume a case where the Abbe number of the negative lens L12 (that has a design value of 23.78) is out by -0.5% and the Abbe number of the positive lens L16 (that has a design value of 25.46) is out by +0.5% and show measured values of the chromatic aberration of magnification of the optical system 1 including lenses with such characteristics, immediately after assembly. This level of variation in the Abbe number is within the range of tolerance for characteristic values of lens glass, and can normally occur during the manufacturing process.

The chromatic aberration of magnification of blue light shown in FIGS. 7(a) and (b) moves to the outer side (to the plus side) of the design values shown in FIGS. 6(a) and (b). It is assumed that in the determination in step 113, the measured values of the chromatic aberration of magnification of blue light exceed the tolerated range and that it is determined that the image formation position of blue light is shifted by at least 75% of the dot pitch. If it is determined in step 113 that the measured values of the chromatic aberration of magnification of blue light are within the tolerated range, the optical system 1 including the optical element P1 in the form of parallel flat plates shown in FIG. 4 is shipped as a completed product.

For the example shown in FIGS. 7(a) and (b), it is determined in step 114 that the chromatic aberration of magnification of blue light has shifted outer side of the design value. Accordingly, in step 115, an optical element LBA that includes type A curved surface elements where the Abbe number v1 of the first element L17 that is plano-concave is larger than the Abbe number v2 of the second element L18 that is plano-convex is selected and used to replace the optical element 50 of the optical system 1.

FIG. 8 shows a type A, cemented curved surface optical element LBA. FIG. 8(a) is a diagram showing the overall configuration of the optical element LBA (type A) and FIG. 8(b) shows lens data of the optical system 1 when the optical element 50 of the optical system 1 has been replaced with the optical element LBA (type A), together with lens data of the positive lens L16 and the prism Pr positioned on both sides of the optical element 50.

The optical element LBA (type A) is composed of a negative lens L17 with a high Abbe number and a positive lens L18 with a low Abbe number. This means that unlike the optical element P1 in the form of parallel flat plates, chromatic aberration of magnification is produced and the image formation position of blue light is moved from the outer side ofward the inside. By constructing the optical element LBA (type A) so that the surface S31 on the screen 80 side and the surface 33 on the DMD 60 side are flat and both surfaces have zero refractive power or extremely close to zero refractive power, the production of various aberrations aside from chromatic aberration of magnification is suppressed.

The distance (optical distance or thickness) between the flat surfaces S31 and S33 on both sides of the optical element LBA (type A) is 8.5mm, which is equal to the distance (optical distance or thickness) between the flat surfaces S31 and S32 on both sides of the parallel flat plates P1. Also, a design is used where the difference between the refractive index n1 of the glass plate L17 of the optical element LBA (type A) and the refractive index n2 of the glass plate L18 is small and the refractive indices of both glass plates n1 and n2 are substantially equal to the refractive index of the glass plates of the optical element P1 in the form of parallel flat plates, so that for example the absolute value of the difference is within 0.02.

It is preferable to select the elements so that the refractive index n1 of the piano-concave first element L17 of the optical element LBA (type A), the refractive index n2 of the plano-convex second element L18, the Abbe number v1 of the first element L17, and the Abbe number v2 of the second element L18 satisfy Conditions (1) and (2) given below.

$$0 \le |n1-n2| < 0.02 \ldots (1)$$

$$2 < |v1-v2| < 33 \quad \ldots (2)$$

By satisfying Condition (1), it is possible to provide an optical element LBA in which elements L17 and L18 with negative and refractive powers but hardly any difference in refractive index are combined so that there is no influence on aberrations aside from chromatic aberration. Also, by satisfying Condition (2), it is possible, by combining a first element L17 of negative refractive power and a second element L18 of positive refractive power such that the refractive powers are opposite and there is a large difference in Abbe number, to favorably correct chromatic aberration, including chromatic aberration of magnification. In Conditions (1) and (2), it is desirable for the difference in refractive index between the elements L17 and L18 to be smaller than the difference in Abbe number. Also, in cases where there is the possibility of a large difference between the measured values of chromatic aberration of magnification and the design values, it is desirable to increase the difference in Abbe number between the optical elements L17 and L18 within the range of Condition (2).

The upper limit of Condition (1) is preferably set at 0.01 and more preferably at 0.005, with 0.001 being desirable. The upper limit of Condition (2) is preferably set at 25 and more preferably at 20, with 15 being desirable. The lower limit of Condition (2) is preferably set at 5, with 10 being desirable. Since the difference in refractive index between the elements L17 and L18 increases when the upper limit of Condition (1) is exceeded, the variation in aberrations aside from chromatic aberration increases and correction by merely replacing the optical element 50 becomes difficult. When the upper limit of Condition (2) is exceeded, the difference in Abbe number between the optical elements L17 and L18 becomes too large and when the lower limit in Condition (2) is exceeded, the difference in Abbe number decreases, and in either case, it becomes difficult to correct chromatic aberration.

The values in Condition (1) and (2) of the optical element LBA (type A) are as follows.

$$|n1-n2|=0.00062$$

$$|v1-v2|=12.05$$

Accordingly, Conditions (1) and (2) are satisfied.

The optical element LBA (type A) shown in FIG. 8(a) internally includes the curve surface S32 whose radius of curvature R32 is 400mm. In step 115, a plurality of optical elements LBA with different radii of curvature R32 and different chromatic aberration of magnification are provided in advance and an optical element LBA suited to correcting the chromatic aberration of magnification obtained by measurement to the design values is used as a replacement. In this example, in addition to the optical element LBA equipped with a curved surface S32 whose radius of curvature R32 is 400mm, an optical element LBA with weak correcting performance which is equipped with a curved surface S32 whose radius of curvature R32 is 600mm and an optical element LBA with strong correcting performance which is equipped with a curved surface S32 whose radius of curvature R32 is 200mm are provided in advance.

FIG. 9 shows the chromatic aberration of magnification of the optical system 1 in which the optical element 50 has been replaced with the optical element LBA (type A) equipped with the curved surface S32 whose radius of curvature R32 is 400mm as the measured values after correction. FIG. 9(a) shows the measured values of chromatic aberration of magnification at the wide angle end and FIG. 9(b) shows the measured values of chromatic aberration of magnification at the telephoto end. As can be understood from these drawings, the measured values of the chromatic aberration of magnification of the optical system 1 are corrected to almost the same state as the design values shown in FIGS. 6(a) and (b). Accordingly, it is possible to manufacture and ship an optical system 1 in which chromatic aberration of magnification is favorably corrected to a state that is the same as or close to the design values.

FIG. 10 shows the chromatic aberration of magnification of the optical system 1 in which the optical element 50 has been replaced with the optical element LBA (type A) equipped with the curved surface S32 whose radius of curvature R32 is 600mm as the measured values after correction. FIG. 10(a) shows the measured values of chromatic aberration of magnification at the wide angle end and FIG. 10(b) shows the measured values of chromatic aberration of magnification at the telephoto end. As can be understood from these drawings, the measured values of the chromatic aberration of magnification of the optical system 1 are corrected so as to approach the design values shown in FIGS. 6(a) and (b). However, compared to the measured values shown in FIGS. 9(a) and (b), the correction is insufficient.

FIG. 11 shows the chromatic aberration of magnification of the optical system 1 in which the optical element 50 has been replaced with the optical element LBA (type A) equipped with the curved surface S32 whose radius of curvature R32 is 200mm as the measured values after correction. FIG. 11(a) shows the measured values of chromatic aberration of magnification at the wide angle end and FIG. 11(b) shows the measured values of chromatic aberration of magnification at the telephoto end. As can be understood from these drawings, the measured values of the chromatic aberration of magnification of the optical system 1 are corrected so as to go beyond the design values shown in FIGS. 6(a) and (b) onto the opposite side (to the inside or minus side), indicating that the correction is too strong.

It is possible to confirm in advance the amount (effect) of the correction produced by a difference in the radius of curvature R32. Accordingly, in step 115, it is possible to select, based on the measured values of the chromatic aberration of magnification obtained in step 112, an optical element LBA equipped with a curved surface R32 that is most suited to correction out of the provided optical elements LBA and to use such optical element LBA to replace the optical element 50.

FIG. 12 shows another example where the optical system 1 was assembled in step 111 using other lenses and the chromatic aberration of magnification was measured in the performance tests in step 112. FIG. 12(a) shows the measured values of chromatic aberration of magnification at the wide angle end and FIG. 12(b) shows the measured values of chromatic aberration of magnification at the telephoto end. The measured values shown in FIG. 12 assume a case where the Abbe number of the negative lens L12 (that has a design value of 23.78) is out by +0.5% and the Abbe number of the positive lens L16 (that has a design value of 25.46) is out by -0.5% and show measured values of the chromatic aberration of magnification of the optical system 1 including lenses with such characteristics, immediately after assembly. This level of variation in the Abbe number is within the range of tolerance for characteristic values of lens glass, and can normally occur during the manufacturing process.

The chromatic aberration of magnification of blue light shown in FIGS. 12(a) and (b) moves to the inner side (to the minus side) of the design values shown in FIGS. 6(a) and (b). In the same way as the description above, it is assumed that in the determination in step 113, the measured values of the chromatic aberration of magnification of blue light exceed the tolerated range and that it is determined that the image formation position of blue light is shifted by at least 75% of the dot pitch.

In the example shown in FIGS. 12(a) and (b), it is determined in step 114 that the chromatic aberration of magnification of blue light has shifted to the inner side of the design values. Accordingly, in step 116, an optical element LBA that includes type B curved surface elements where the Abbe number v1 of the first element L17 that is plano-concave is smaller than the Abbe number v2 of the second element L18 that is plano-convex is selected and used to replace the optical element 50 of the optical system 1.

FIG. 13 shows a type B, cemented curved surface optical element LBA. FIG. 13(a) is a diagram showing the overall configuration of the optical element LBA (type B) and FIG. 13(b) shows lens data of the optical system 1 when the optical element 50 of the optical system 1 has been replaced with the optical element LBA (type B), together with lens data of the positive lens L16 and the prism Pr positioned on both sides of the optical element 50.

The optical element LBA (type B) is composed of a negative lens L17 with a low Abbe number and a positive lens L18 with a high Abbe number. This means that unlike the optical element P1 in the form of parallel flat plates, chromatic aberration of magnification is produced. The optical element LBA (type B) produces chromatic aberration of magnification in the opposite direction to the optical element LBA (type A), and moves the image formation position of blue light from the inner side ofward the outside. With the optical element LBA (type B) also, the surface S31 on the screen 80 side and the surface 33 on the DMD 60 side are flat and both surfaces have zero refractive power or extremely close to zero refractive power. The distance (optical distance or thickness) between the flat surfaces S31 and S33 on both sides of the optical element LBA (type B) is 8.5mm, which is equal to the distance (optical distance or thickness) between the flat surfaces S31 and S32 on both sides of the parallel flat plates P1. Also, a design is used where the difference between the refractive index n1 of the glass plate L17 of the optical element LBA (type B) and the refractive index n2 of the glass plate L18 is small and the refractive indices of both glass plates n1 and n2 are substantially equal to the refractive index of the glass plates of the optical element P1 in the form of parallel flat plates, so that for example the absolute value of the difference is within 0.02.

The values of the refractive index n1 of the piano-concave first element L17 of the optical element LBA (type B) the refractive index n2 of the plano-convex second element L18, the Abbe number v1 of the first element L17 and the Abbe number v2 of the second element L18 in Conditions (1) and (2) are as given below.

$$|n1-n2| = 0.00062$$

$$|v1-v2| = 12.05$$

Accordingly, Conditions (1) and (2) are satisfied.

The optical element LBA (type B) shown in FIG. 13(a) internally includes the curve surface S32 whose radius of curvature R32 is 400mm. In step 116, a plurality of optical elements LBA with different radii of curvature R32 and different chromatic aberration of magnification are provided in advance and an optical element LBA suited to correcting the chromatic aberration of magnification obtained by measurement to the design values is used as a replacement. In this example, in addition to the optical element LBA equipped with a curved surface S32 whose radius of curvature R32 is 400mm, an optical element LBA with weak correcting performance which is equipped with a curved surface S32 whose radius of curvature R32 is 600mm and an optical element LBA with strong correcting performance which is equipped with a curved surface S32 whose radius of curvature R32 is 200mm are provided in advance.

FIG. 14 shows the chromatic aberration of magnification of the optical system 1 in which the optical element 50 has been replaced with the optical element LBA (type B) equipped with the curved surface S32 whose radius of curvature R32 is 400mm as the measured values after correction. FIG. 14(a) shows the measured values of chromatic aberration of magnification at the wide angle end and FIG. 14(b) shows the measured values of chromatic aberration of magnification at the telephoto end. As can be understood from these drawings, the measured values of the chromatic aberration of magnification of the optical system 1 are corrected to almost the same state as the design values shown in FIGS. 6(a) and (b). Accordingly, it is possible to manufacture and ship an optical system 1 in which chromatic aberration of magnification is favorably corrected to a state that is the same as or close to the design values.

FIG. 15 shows the chromatic aberration of magnification of the optical system 1 in which the optical element 50 has been replaced with the optical element LBA (type B) equipped with the curved surface S32 whose radius of curvature R32 is 600mm as the measured values after correction. FIG. 15(a) shows the measured values of chromatic aberration of magnification at the wide angle end and FIG. 15(b) shows the measured values of chromatic aberration of magnification at the telephoto end. As can be understood from these drawings, the measured values of the chromatic aberration of magnification of the optical system 1 are corrected so as to approach the design values shown in FIGS. 6(a) and (b). However, compared to the measured values shown in FIGS. 14(a) and (b), the correction is insufficient.

FIG. 16 shows the chromatic aberration of magnification of the optical system 1 in which the optical element 50 has been replaced with the optical element LBA (type B) equipped with the curved surface S32 whose radius of curvature R32 is 200mm as the measured values after correction. FIG. 16(a) shows the measured values of chromatic aberration of magnification at the wide angle end and FIG. 16(b) shows the measured values of chromatic aberration of magnification at the telephoto end. As can be understood from these drawings, the measured values of the chromatic aberration of magnification of the optical system 1 are corrected so as to go beyond the design values shown in FIGS. 6(a) and (b) onto the opposite side (to the outside or plus side), indicating that the correction is too strong.

It is possible to confirm in advance the amount of the correction produce by a difference in the radius of curvature R32 for the optical element LBA (type B) also. Accordingly, in step 116, it is possible to select, based on the measured values of the chromatic aberration of magnification obtained in step 112, an optical element LBA equipped with a curved surface R32 that is most suited to correction out of the provided optical elements LBA and to use such optical element LBA to replace the optical element 50. For this reason, even for an optical system 1 where the chromatic aberration of magnification ends up outside the tolerated range in the assembled state due to tolerances which have various causes, by replacing the optical element 50 that is replaceable and is inserted in advance with an optical element 50 that is suited to correcting the measured values of chromatic aberration of magnification to a state that is close to the design values, it is possible to manufacture and provide an optical system where the chromatic aberration of magnification is suppressed to within the tolerated range.

Note that the present invention is not limited to the embodiments described above and includes the scope defined by the patent claims. As one example, although the present invention has been described above with an optical system for a projector as an example, the present invention may be an optical system for image pickup. The configuration of the lens system included in the optical system is not limited to the six-group configuration described above and may be a configuration with five groups or fewer or seven groups or more. In addition, the lens system may be a system that does not perform zooming. The materials that respectively construct the lens system and optical elements may be glass or may be resin.

## Claims

1. A method of manufacturing an optical system including a lens system including a plurality of lenses, comprising:

   acquiring chromatic aberration of the optical system; and
   replacing, based on the chromatic aberration of the optical system, an optical element, that is inserted any one of between the plurality of lenses, on an outside a lens closest to a magnifying side out of the plurality of lenses, and on an outside a lens closest to an image-reducing side out of the plurality of lenses, with another optical element that has a same optical distance and a different chromatic aberration of magnification.

2. The method according to claim 1, wherein the replacing includes replacing a optical element that is planar type and does not include a curved surface element with a optical element that is planar type and includes a cemented curved surface.

3. The method according to claim 2, wherein the optical element that includes a cemented curved surface includes a first element that is plano-concave and a second element that is plano-convex, and a refractive index n1 of the first element, a refractive index n2 of the second element, an Abbe number v1 of the first element, and an Abbe number v2 of the second element satisfy the following conditions,

$$0 \leq |n1 - n2| < 0.02$$

$$2 < |v1 - v2| < 33$$

and the replacing includes:

   replacing, when a chromatic aberration of magnification of blue, out of the chromatic aberration, has moved to an outer side of a design value, with an optical element that includes a cemented curved surface such that the Abbe number v1 is larger than the Abbe number v2; and
   replacing, when the chromatic aberration of magnification of blue has moved to an inner side of the design value, with an optical element that includes a cemented curved surface such that the Abbe number v1 is smaller than the Abbe number v2.

4. The method according to any one of claim 1 to 3,

wherein the optical system is a zooming optical system, and
the replacing includes replacing an optical element inserted on the outside of a lens closest to the image-reducing side.

5. The method according to any one of claim 1 to 3, wherein the optical system is an optical system that projects projection light from a light modulating device disposed on the image-reducing side, and
the replacing includes replacing an optical element inserted on the outside of a lens closest to the image-reducing side and in a gap between the lens and the light modulating device.

6. A projector comprising:

   an optical system manufactured by the method according to any one of claim 1 to 5; and
   a light modulating device disposed on an outside of a lens closest to the image-reducing side.

7. An optical system comprising a lens system including a plurality of lenses,
   wherein an optical element, which is inserted any one of between the plurality of lenses, on an outside of a lens closest to a magnifying side out of the plurality of lenses, and on an outside of a lens closest to an image-reducing side out of the plurality of lenses, is replaced, based on the chromatic aberration acquired during manufacturing, with another optical element that has a same optical distance and a different chromatic aberration of magnification.

8. The optical system according to claim 7, wherein the other optical element is an optical element that is planar type and includes a cemented curved surface.

9. The optical system according to claim 8,
   wherein the optical element that includes a cemented curved surface includes a first element that is plano-concave and a second element that is plano-convex, and a refractive index n1 of the first element, a refractive index n2 of the second element, an Abbe number v1 of the first element, and an Abbe number v2 of the second element satisfy the following conditions,

$$0 \leq |n1-n2| < 0.02$$

$$2 < |v1-v2| < 33.$$

10. A projector comprising:

    the optical system according to any one of claim 7 to 9; and
a light modulating device disposed on an outside of a lens closest to the image-reducing side.

# Fig. 1

# Fig. 2

# Fig. 3

```
                    ┌─────────────┐
                    │    START    │
                    └─────────────┘
                           │
                           ▼
        ┌──────────────────────────────────────────┐   111
        │ ASSEMBLE OPTICAL SYSTEM INCLUDING LENS    │───
        │   SYSTEM AND PLANAR OPTICAL ELEMENT       │
        └──────────────────────────────────────────┘
                           │
                           ▼
            ┌──────────────────────────────┐   112
            │  OPTICAL PERFORMANCE TESTS    │───
            │    (CHROMATIC ABERRATION)     │
            └──────────────────────────────┘
                           │
                           ▼
                   ╱╲
                  ╱   ╲                         113
                 ╱      ╲
        ╱─────────────────────────╲  Y
       ╱  IS OBTAINED CHROMATIC     ╲──────────────────────────┐
       ╲  ABERRATION WITHIN TOLERATED╱                         │
        ╲ RANGE OF DESIGN VALUES    ╱                          │
         ╲─────────────────────────╱                           │
                   │ N                                          │
                   ▼                                            │
                   ╱╲                          114              │
                  ╱   ╲                                         │
       ╱─────────────────────────╲  Y                          │
      ╱ IS CHROMATIC ABERRATION    ╲─────────────────┐         │
      ╲ OF MAGNIFICATION OF BLUE   ╱                  │         │
       ╲ OUTER SIDE OF DESIGN VALUES                  │         │
        ╲───────────────────────╱                    │         │
                   │ N            116      115        │         │
                   ▼                                  ▼         │
    ┌──────────────────────────┐   ┌──────────────────────────┐│
    │ REPLACE WITH CEMENTED     │   │ REPLACE WITH CEMENTED    ││
    │ CURVED SURFACE-TYPE       │   │ CURVED SURFACE-TYPE      ││
    │ OPTICAL ELEMENT WHERE ν1<ν2│  │ OPTICAL ELEMENT WHERE ν1>ν2│
    └──────────────────────────┘   └──────────────────────────┘│
                   │                          │                 │
                   │◄─────────────────────────┴─────────────────┘
                   ▼
            ┌─────────────┐
            │     END     │
            └─────────────┘
```

# Fig. 4

# Fig. 5

(a)

| LENS SURFACE NUMBER | RADIUS OF CURVATURE(Ri) | DISTANCE (di) | REFRACTIVE INDEX(nd) | ABBE NUMBER (ν d) | LENS NAME | |
|---|---|---|---|---|---|---|
| SCREEN | Flat | | | | | |
| 1 | 128.205 | 10.83 | 1.83500 | 42.98 | L1 | |
| 2 | 502.578 | 0.32 | | | | |
| 3 | 89.677 | 2.50 | 1.62041 | 60.34 | L2 | |
| 4 | 46.626 | 12.86 | | | | |
| 5 | 234.027 | 2.50 | 1.83500 | 42.98 | L3 | |
| 6 | 64.279 | 14.14 | | | | |
| 7 | −99.645 | 2.50 | 1.83500 | 42.98 | L4 | |
| 8 | 133.448 | V1 | | | | |
| 9 | −1151.399 | 6.82 | 1.80518 | 25.46 | L5 | |
| 10 | −117.268 | 10.00 | | | | |
| 11 | −3577.444 | 2.50 | 1.84666 | 23.78 | L6 | LB1 |
| 12 | 51.721 | 17.89 | 1.80610 | 33.27 | L7 | |
| 13 | −161.779 | V2 | | | | |
| 14 | 77.720 | 8.76 | 1.72342 | 37.99 | L8 | |
| 15 | −277.226 | 16.77 | | | | |
| 16(STOP) | Flat | V3 | | | | |
| 17 | −99.228 | 6.06 | 1.84666 | 23.78 | L9 | LB2 |
| 18 | −28.127 | 2.92 | 1.83400 | 37.34 | L10 | |
| 19 | 80.789 | V4 | | | | |
| 20 | 13571.725 | 6.16 | 1.48749 | 70.44 | L11 | |
| 21 | −43.588 | 2.43 | | | | |
| 22 | −34.166 | 2.62 | 1.84666 | 23.78 | L12 | LB3 |
| 23 | 129.874 | 8.64 | 1.48749 | 70.44 | L13 | |
| 24 | −59.712 | 0.25 | | | | |
| 25 | −428.954 | 7.42 | 1.49700 | 81.61 | L14 | |
| 26 | −66.233 | 0.25 | | | | |
| 27 | 1189.292 | 11.87 | 1.49700 | 81.61 | L15 | |
| 28 | −54.557 | V5 | | | | |
| 29 | 98.222 | 7.25 | 1.80518 | 25.46 | L16 | |
| 30 | 1195.397 | 1.50 | | | | |
| 31 | Flat | 8.50 | 1.51680 | 64.20 | PARALLEL FLAT PLATES Pl | |
| 32 | Flat | 25.00 | | | | |
| 33 | Flat | 54.00 | 1.51680 | 64.20 | PRISM Pr | |
| 34 | Flat | 5.06 | | | | |
| LIGHT VALVE | Flat | | | | | |

(b)

| ZOOM DISTANCE (di) | WIDE ANGLE END | TELEPHOTO END |
|---|---|---|
| 8(V1) | 15.07 | 11.21 |
| 13(V2) | 28.20 | 6.03 |
| 16(V3) | 14.91 | 27.34 |
| 19(V4) | 12.05 | 5.10 |
| 28(V5) | 0.50 | 21.04 |

# Fig. 6

(a)

DESIGN VALUES OF CHROMATIC ABERRATION OF MAGNIFICATION AT WIDE ANGLE END (mm)

(b)

DESIGN VALUES OF CHROMATIC ABERRATION OF MAGNIFICATION AT TELEPHOTO END (mm)

# Fig. 7

(a)

TANGENTIAL RELATIVE HEIGHT OF FIELD OF VIEW 1.00 (30.70)° SAGITTAL

RELATIVE HEIGHT OF FIELD OF VIEW 0.80 (25.40)°

RELATIVE HEIGHT OF FIELD OF VIEW 0.60 (19.56)°

RELATIVE HEIGHT OF FIELD OF VIEW 0.40 (13.29)°

RELATIVE HEIGHT OF FIELD OF VIEW 0.00 (0.000)°

MEASURED VALUES OF CHROMATIC ABERRATION OF MAGNIFICATION AT WIDE ANGLE END (mm)

(b)

TANGENTIAL RELATIVE HEIGHT OF FIELD OF VIEW 1.00 (22.99)° SAGITTAL

RELATIVE HEIGHT OF FIELD OF VIEW 0.80 (18.76)°

RELATIVE HEIGHT OF FIELD OF VIEW 0.60 (14.29)°

RELATIVE HEIGHT OF FIELD OF VIEW 0.40 (9.634)°

RELATIVE HEIGHT OF FIELD OF VIEW 0.00 (0.000)°

MEASURED VALUES OF CHROMATIC ABERRATION OF MAGNIFICATION AT TELEPHOTO END (mm)

# Fig. 8

( a )

50

S32

S31

S33

L17 L18

LBA(typeA)

( b )

| LENS SURFACE NUMBER | RADIUS OF CURVATURE(Ri) | DISTANCE (di) | REFRACTIVE INDEX(nd) | ABBE NUMBER (νd) | LENS NAME | |
|---|---|---|---|---|---|---|
| 29 | 98.222 | 7.25 | 1.80518 | 25.46 | L16 | |
| 30 | 1195.397 | 1.50 | | | | |
| 31 | Flat | 3.00 | 1.51680 | 64.20 | L17 | LBA (typeA) |
| 32 | 400.000 | 5.50 | 1.51742 | 52.15 | L18 | |
| 33 | Flat | 25.00 | | | | |
| 34 | Flat | 54.00 | 1.51680 | 64.20 | PRISM | |
| 35 | Flat | 5.06 | | | | |
| LIGHT VALVE | Flat | | | | | |

# Fig. 9

(a)

TANGENTIAL | RELATIVE HEIGHT OF FIELD OF VIEW 1.00 (30.71)° | SAGITTAL

RELATIVE HEIGHT OF FIELD OF VIEW 0.80 (25.40)°

RELATIVE HEIGHT OF FIELD OF VIEW 0.60 (19.56)°

RELATIVE HEIGHT OF FIELD OF VIEW 0.40 (13.29)°

RELATIVE HEIGHT OF FIELD OF VIEW 0.00 (0.000)°

MEASURED VALUES OF CHROMATIC ABERRATION OF MAGNIFICATION AT WIDE ANGLE END (mm)

(b)

RELATIVE HEIGHT OF FIELD OF VIEW 1.00 (22.99)°

TANGENTIAL | SAGITTAL

RELATIVE HEIGHT OF FIELD OF VIEW 0.80 (18.77)°

RELATIVE HEIGHT OF FIELD OF VIEW 0.60 (14.30)°

RELATIVE HEIGHT OF FIELD OF VIEW 0.40 (9.635)°

RELATIVE HEIGHT OF FIELD OF VIEW 0.00 (0.000)°

MEASURED VALUES OF CHROMATIC ABERRATION OF MAGNIFICATION AT TELEPHOTO END (mm)

# Fig. 10

(a)

TANGENTIAL
0.02

RELATIVE HEIGHT OF
FIELD OF VIEW 1.00
(30.71)°

SAGITTAL
0.02

-0.02

-0.02

RELATIVE HEIGHT OF
FIELD OF VIEW 0.80
(25.40)°

0.02

0.02

-0.02

RELATIVE HEIGHT OF
FIELD OF VIEW 0.60
(19.56)°

0.02

0.02

-0.02

-0.02

RELATIVE HEIGHT OF
FIELD OF VIEW 0.40
(13.29)°

0.02

0.02

-0.02

-0.02

RELATIVE HEIGHT OF
FIELD OF VIEW 0.00
(0.000)°

0.02

0.02

-0.02

-0.02

MEASURED VALUES OF CHROMATIC ABERRATION OF MAGNIFICATION AT WIDE ANGLE END (mm)

(b)

RELATIVE HEIGHT OF
FIELD OF VIEW 1.00
(22.99)°

TANGENTIAL
0.02

SAGITTAL
0.02

-0.02

RELATIVE HEIGHT OF
FIELD OF VIEW 0.80
(18.77)°

0.02

0.02

-0.02

-0.02

RELATIVE HEIGHT OF
FIELD OF VIEW 0.60
(14.30)°

0.02

0.02

-0.02

-0.02

RELATIVE HEIGHT OF
FIELD OF VIEW 0.40
(9.635)°

0.02

0.02

-0.02

RELATIVE HEIGHT OF
FIELD OF VIEW 0.00
(0.000)°

0.02

0.02

-0.02

-0.02

MEASURED VALUES OF CHROMATIC ABERRATION OF MAGNIFICATION AT TELEPHOTO END (mm)

# Fig. 11

(a)

MEASURED VALUES OF CHROMATIC ABERRATION OF MAGNIFICATION AT WIDE ANGLE END (mm)

(b)

MEASURED VALUES OF CHROMATIC ABERRATION OF MAGNIFICATION AT TELEPHOTO END (mm)

# Fig. 12

(a)

TANGENTIAL

SAGITTAL

RELATIVE HEIGHT OF
FIELD OF VIEW 1.00
(30.71)°

RELATIVE HEIGHT OF
FIELD OF VIEW 0.80
(25.40)°

RELATIVE HEIGHT OF
FIELD OF VIEW 0.60
(19.56)°

RELATIVE HEIGHT OF
FIELD OF VIEW 0.40
(13.29)°

RELATIVE HEIGHT OF
FIELD OF VIEW 0.00
(0.000)°

MEASURED VALUES OF CHROMATIC ABERRATION OF MAGNIFICATION AT WIDE ANGLE END (mm)

(b)

TANGENTIAL

RELATIVE HEIGHT OF
FIELD OF VIEW 1.00
(22.99)°

SAGITTAL

RELATIVE HEIGHT OF
FIELD OF VIEW 0.80
(18.77)°

RELATIVE HEIGHT OF
FIELD OF VIEW 0.60
(14.30)°

RELATIVE HEIGHT OF
FIELD OF VIEW 0.40
(9.635)°

RELATIVE HEIGHT OF
FIELD OF VIEW 0.00
(0.000)°

MEASURED VALUES OF CHROMATIC ABERRATION OF MAGNIFICATION AT TELEPHOTO END (mm)

# Fig. 13

（a）

50

S32

S33

S31

L17 L18

LBA(typeB)

（b）

| LENS SURFACE NUMBER | RADIUS OF CURVATURE(Ri) | DISTANCE (di) | REFRACTIVE INDEX(nd) | ABBE NUMBER ($\nu$ d) | LENS NAME | |
|---|---|---|---|---|---|---|
| 29 | 98.222 | 7.25 | 1.80518 | 25.46 | L16 | |
| 30 | 1195.397 | 1.50 | | | | |
| 31 | Flat | 3.00 | 1.51742 | 52.15 | L17 | LBA |
| 32 | 400.000 | 5.50 | 1.51680 | 64.20 | L18 | (typeB) |
| 33 | Flat | 25.00 | | | | |
| 34 | Flat | 54.00 | 1.51680 | 64.20 | PRISM | |
| 35 | Flat | 5.06 | | | | |
| LIGHT VALVE | Flat | | | | | |

# Fig. 14

(a)

TANGENTIAL                                    SAGITTAL

RELATIVE HEIGHT OF
FIELD OF VIEW 1.00
(30.70)°

RELATIVE HEIGHT OF
FIELD OF VIEW 0.80
(25.40)°

RELATIVE HEIGHT OF
FIELD OF VIEW 0.60
(19.56)°

RELATIVE HEIGHT OF
FIELD OF VIEW 0.40
(13.29)°

RELATIVE HEIGHT OF
FIELD OF VIEW 0.00
(0.000)°

MEASURED VALUES OF CHROMATIC ABERRATION OF MAGNIFICATION AT WIDE ANGLE END (mm)

(b)

TANGENTIAL                                    SAGITTAL

RELATIVE HEIGHT OF
FIELD OF VIEW 1.00
(22.98)°

RELATIVE HEIGHT OF
FIELD OF VIEW
0.80 (18.76)°

RELATIVE HEIGHT OF
FIELD OF VIEW 0.60
(14.29)°

RELATIVE HEIGHT OF
FIELD OF VIEW 0.40
(9.633)°

RELATIVE HEIGHT OF
FIELD OF VIEW 0.00
(0.000)°

MEASURED VALUES OF CHROMATIC ABERRATION OF MAGNIFICATION AT TELEPHOTO END (mm)

# Fig. 15

(a)

MEASURED VALUES OF CHROMATIC ABERRATION OF MAGNIFICATION AT WIDE ANGLE END (mm)

(b)

MEASURED VALUES OF CHROMATIC ABERRATION OF MAGNIFICATION AT TELEPHOTO END (mm)

# Fig. 16

( a )

MEASURED VALUES OF CHROMATIC ABERRATION OF MAGNIFICATION AT WIDE ANGLE END (mm)

( b )

MEASURED VALUES OF CHROMATIC ABERRATION OF MAGNIFICATION AT TELEPHOTO END (mm)

**EP 3 021 152 A1**

# INTERNATIONAL SEARCH REPORT

| International application No. |
|---|
| PCT/JP2014/003693 |

**A. CLASSIFICATION OF SUBJECT MATTER**
*G02B13/16*(2006.01)i, *G03B21/14*(2006.01)i

According to International Patent Classification (IPC) or to both national classification and IPC

**B. FIELDS SEARCHED**

Minimum documentation searched (classification system followed by classification symbols)
G02B13/16, G03B21/14

Documentation searched other than minimum documentation to the extent that such documents are included in the fields searched
Jitsuyo Shinan Koho          1922-1996   Jitsuyo Shinan Toroku Koho   1996-2014
Kokai Jitsuyo Shinan Koho    1971-2014   Toroku Jitsuyo Shinan Koho   1994-2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2006-39034 A  (Sony Corp.),<br>09 February 2006 (09.02.2006),<br>examples 1, 2<br>(Family: none) | 6,7,10<br>1,4<br>2,3,5,8,9 |
| X<br>Y<br>A | JP 2008-26751 A  (Casio Computer Co., Ltd.),<br>07 February 2008 (07.02.2008),<br>examples 1 to 4, 6, 7<br>& US 2008/0019019 A1    & CN 101114047 A<br>& KR 10-2008-0009638 A   & TW 200813471 A | 6,7,10<br>1,4<br>2,3,5,8,9 |
| X<br>Y<br>A | JP 2009-25754 A  (Fujinon Corp.),<br>05 February 2009 (05.02.2009),<br>examples 1, 2<br>(Family: none) | 6,7,10<br>1,4<br>2,3,5,8,9 |

☒ Further documents are listed in the continuation of Box C.   ☐ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 September, 2014 (22.09.14) | 07 October, 2014 (07.10.14) |

| Name and mailing address of the ISA/<br>Japanese Patent Office | Authorized officer |
|---|---|
| Facsimile No. | Telephone No. |

Form PCT/ISA/210 (second sheet) (July 2009)

28

**INTERNATIONAL SEARCH REPORT**

International application No.

PCT/JP2014/003693

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2001-228396 A  (Fuji Photo Optical Co., Ltd.),<br>24 August 2001 (24.08.2001),<br>paragraph [0024]<br>& US 2001/0019455 A1 | 1,4<br>2,3,5-9 |

Form PCT/ISA/210 (continuation of second sheet) (July 2009)

**EP 3 021 152 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007041529 A